# EUROPEAN PATENT APPLICATION

(11) **EP 3 502 643 A1**
(43) Date of publication of application: **26.06.2019**
(21) Application number: 18183143.9
(22) Date of filing: 12.07.2018
(51) Int. Cl.: G01M 3/32

(54) **AIRTIGHTNESS DETECTION EQUIPMENT**

(30) Priority: 20.12.2017 CN 201721798476 U
(71) Applicant: Miasolé Equipment Integration (Fujian) Co., Ltd., 362000 Quanzhou Fujian (CN)
(72) Inventor: ZHOU, Zhigang, QUANZHOU, Fujian 362000 (CN); ZHOU, Yang, QUANZHOU, Fujian 362000 (CN); CHEN, Long, QUANZHOU, Fujian 362000 (CN); KE, Jun, QUANZHOU, Fujian 362000 (CN); GENG, Sa, QUANZHOU, Fujian 362000 (CN); ZENG, Dechun, QUANZHOU, Fujian 362000 (CN); JIANG, Hu, QUANZHOU, Fujian 362000 (CN); SONG, Xinguo, QUANZHOU, Fujian 362000 (CN)
(74) Representative: Cabinet Beau de Loménie

(57) **Abstract**

The present disclosure relates to an airtightness detection equipment for detecting the airtightness of a pedestal on which a target is mounted, comprising: a sealing device (2) configured to hermetically adhere to the pedestal, forming a sealed space between the sealing device and the pedestal; a vacuum pumping device (3) configured to evacuate the sealed space; a gas detection device (4) configured to detect gas in the sealed space.

## Description

### TECHNICAL FIELD

The present disclosure relates to the art of coating, particularly to an airtightness detection equipment.

### BACKGROUND

The target leak detection technology for vacuum coating equipment at home and abroad is based on chamber on-line vacuum helium leak detection. Since the target replacement cycle is short, it is necessary to perform leak detection on the pedestal on which a target is mounted after each replacement of the target to ensure that the degree of vacuum of the coating equipment is up to standard.

Currently, for a large-scale vacuum coating equipment in continuous production, the time taken for each vacuum and vacuum break takes approximately 1-2 hours, and the probability of leakage based on the pedestal after each replacement of the cadmium sulfide planar target is approximately 30%. Every time a cadmium sulfide planar target is replaced, three people need to wear chemical protective clothing for replacement and maintenance. And for employee safety, the chemical protective clothing is for one-time use only. If the online leak detection fails, the vacuum coating equipment must be reused to repeatedly evacuate the pedestal, break the vacuum, and disassemble the target, wasting too much time, manpower, material resources, and financial resources.

### SUMMARY

The purpose of the present disclosure is to provide an airtightness detection equipment to solve the problems in the related art and facilitate the airtightness detection of the pedestal on which a target is mounted.

The present disclosure provides an airtightness detection equipment for detecting the airtightness of a pedestal on which a target is mounted comprising:
a sealing device configured to hermetically adhere to the pedestal, forming a sealed space between the sealing device and the pedestal;
a vacuum pumping device configured to evacuate the sealed space;
a gas detection device configured to detect gas in the sealed space.

Optionally, the airtightness detection equipment comprises a bracket, and the sealing device is disposed on the bracket.

Optionally, the sealing device comprises a sealing cap, and a periphery of the sealing cap is hermetically adhered to a periphery of the pedestal.

Optionally, the sealing cap is provided with a sealing ring on the periphery, and the sealing ring is located between the sealing cap and the pedestal.

Optionally, the vacuum pumping device comprises a mechanical pump, a bellows, and a molecular pump connected in series, and the molecular pump is configured to evacuate the sealed space.

Optionally, the vacuum pumping device further comprises a pneumatic butterfly valve, which is disposed on the molecular pump and connected to the sealed space.

Optionally, the sealing device is provided with a first valve connected to the sealed space, and the first valve is used to break the vacuum in the sealed space.

Optionally, the sealing device is provided with a second valve connected to the sealed space, and the second valve is connected to the gas detection device.

Optionally, the bracket comprises at least two vertical beams connected by a cross beam which can vertically move along the vertical beams, and the sealing device is disposed on the cross beam, and can reciprocate along the cross beam.

Optionally, the airtightness detection equipment further comprises a plurality of rollers provided at the bottom of the vertical beam.

Optionally, the airtightness detection equipment further comprises a controller connected to the vacuum pumping device, and the controller is provided with an operation interface.

The airtightness detection equipment provided by the present disclosure forms a sealed space by hermetically adhering a sealing device to a pedestal, and evacuates the sealed space through a vacuum pumping device, and then determines airtightness of the pedestal using a gas detection device by detecting whether gas outside the sealed space enters the sealed space. The present disclosure has the advantages of simple structure and convenient operation, and can realize offline leak detection of the pedestal after each replacement of the target, and can quickly achieve vacuum and vacuum breaking of the sealed space, and thus greatly shorten the production cycle, save time, and can reduce use of chemical protection suits, save resources and reduce environmental pollution. In addition, flexible movement can be achieved by the use of the roller, which is convenient to use.

### BRIEF DESCRIPTION OF THE DRAWINGS

FIG. 1 is a schematic structural view of an airtightness detection equipment according to an embodiment of the present disclosure;
FIG. 2 is a schematic structural view of an airtightness detection equipment according to another embodiment of the present disclosure.

### DETAILED DESCRIPTION

The embodiments of the present disclosure are described in detail below, and examples of the embodiments are shown in the accompanying drawings, wherein the same or similar reference numerals denote the same or similar elements or elements having the same or similar functions throughout. The embodiments described below with reference to the drawings are exemplary, are used to explain the present disclosure only, and not intended to limit the present disclosure in any way.

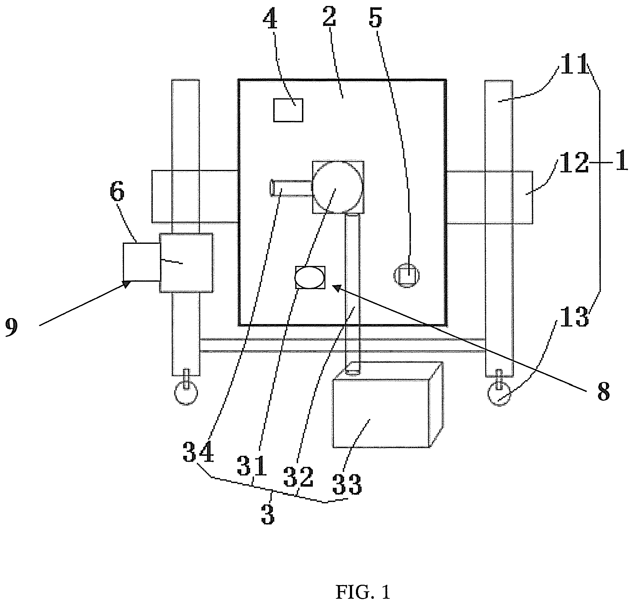

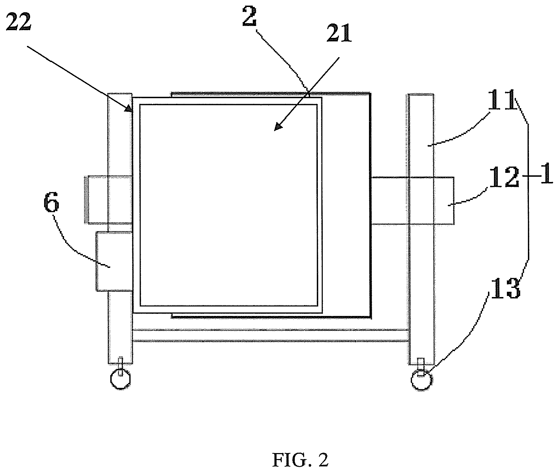

As shown in FIG. 1, also referring to FIG. 2, an embodiment of the present disclosure provides an airtightness detection equipment for detecting the airtightness of a pedestal on which a target is mounted comprising:
a bracket 1;
a sealing device 2 disposed on the bracket 1 for hermetically adhering to the pedestal, forming a sealed space between the sealing device 2 and the pedestal;
a vacuum pumping device 3 for evacuating the sealed space;
a gas detection device 4 for detecting gas in the sealed space.

Wherein, the pedestal is also called a pedestal door, which is used for mounting a target. During the process of work, in order to facilitate detection, a gas such as helium is generally sprayed outside the sealed space. The gas detection device 4 employs a helium gas detector to determine the airtightness of the pedestal by detecting whether there is helium gas in the sealed space after it is evacuated. Generally, the target is also located in the sealed space.

Optionally, the sealing device 2 comprises a sealing cap 21, and a periphery of the sealing cap 21 is used for hermetically adhering to a periphery of the pedestal. Optionally, the sealing cap 21 is provided with a sealing ring (or sealing rings) 22 on the periphery, and the sealing ring 22 is located between the sealing cap 21 and the pedestal.

Optionally, the vacuum pumping device 3 comprises a mechanical pump 33, a bellows 32, and a molecular pump 31 connected in series, and the molecular pump 31 is used to evacuate the sealed space. Optionally, the vacuum pumping device 3 further comprises a pneumatic butterfly valve 34, which is disposed on the molecular pump 31 and connected to the sealed space. Wherein, the role of the pneumatic butterfly valve 34 is to connect with the sealed space, and it also functions to control the opening and closing, or the degree of opening and closing of the molecular pump 31. The molecular pump 31 is generally mounted directly on the back of the sealing device 2, and communicates with the sealed space through the pneumatic butterfly valve 34.

Optionally, the sealing device 2 is provided with a first valve 5 connected to the sealed space, and the first valve 5 is configured to break the vacuum in the sealed space. Wherein, the first valve 5 generally adopts a manual valve. When it is required to break the vacuum, the first valve 5 is opened, and the external air enters the sealed space through the first valve 5, and the pedestal can be removed and replaced.

Optionally, the sealing device 2 is provided with a second valve 8 connected to the sealed space, and the second valve 8 is connected to the gas detection device 4.

Optionally, the bracket 1 comprises at least two vertical beams 11 connected by a cross beam 12 which can vertically move along the vertical beams, and the sealing device 2 is disposed on the cross beam 12, and can reciprocate along the cross beam 12.

Wherein, the connections between the cross beam 12 and the vertical beam 11 and between the sealing device 2 and the cross beam 12 are active connections, and there are various ways of connection, such as through snaps, bolts. The reciprocating movement of the sealing device 2 along the cross beam 12 and the vertical movement of the sealing device 12 along the vertical beam 11 along with the cross beam 12 are finally achieved, which greatly improves the utility of the airtightness detection equipment according to the present disclosure, and can aim at different application environments.

Optionally, the airtightness detection equipment further comprises a plurality of rollers provided at the bottom of the vertical beam. The arrangement of the roller 13 allows the airtightness detection equipment according to the present disclosure to be flexibly moved.

Optionally, the airtightness detection equipment further comprises a controller 6 connected to the vacuum pumping device 3, and the controller 6 is provided with an operation interface 9. The controller 6 may also be connected to the gas detection device 4 to collectively control the coordinated actions of the various components, and it is convenient to use.

The airtightness detection equipment provided by the present disclosure forms a sealed space by hermetically adhering a sealing device 2 to a pedestal, and evacuates the sealed space through a vacuum pumping device 3, and then determines airtightness of the pedestal using a gas detection device 4 by detecting whether gas outside the sealed space enters the sealed space. The airtightness detection equipment according to the present disclosure has the benefits of simple structure and convenient operation, and can realize offline leak detection of the pedestal after each replacement of the target, and can quickly achieve vacuum and vacuum breaking of the sealed space within a period of approximately 3-5 minutes each time, greatly shorten the production cycle, save time, and can reduce use of chemical protection suits, save resources and reduce environmental pollution. In addition, flexible movement can be achieved through the roller 13, which is convenient to use.

The structures, features, and effects of the airtightness detection equipment according to the present disclosure are described in detail based on the embodiments shown in the drawings. The above description is only the exemplary embodiments of the present disclosure, but the present disclosure does not limit the scope of implementation as shown in the drawings. Any changes made according to the concept of the present disclosure, or equivalent embodiments that are modified to equivalent changes, should still fall within the protection scope of the present disclosure if they do not go beyond the spirit covered by the description and the drawings.

## Claims

1. An airtightness detection equipment for detecting the airtightness of a pedestal on which a target is mounted, comprising:
a sealing device (2) configured to hermetically adhere to the pedestal, forming a sealed space between the sealing device (2) and the pedestal;
a vacuum pumping device (3) configured to evacuate the sealed space;
a gas detection device (4) configured to detect gas in the sealed space.

2. The airtightness detection equipment according to claim 1, further comprising a bracket (1), wherein the sealing device (2) is disposed on the bracket (1).

3. The airtightness detection equipment according to claim 1 or 2, wherein the sealing device (2) comprises a sealing cap (21), and a periphery of the sealing cap (21) is hermetically adhered to a periphery of the pedestal.

4. The airtightness detection equipment according to claim 3, wherein the sealing cap (21) is provided with a sealing ring (22) on the periphery, and the sealing ring (22) is located between the sealing cap (21) and the pedestal.

5. The airtightness detection equipment according to anyone of claims 1 to 4, wherein the vacuum pumping device (3) comprises a mechanical pump (33), a bellows (32), and a molecular pump (31) connected in series, and the molecular pump (31) is configured to evacuate the sealed space.

6. The airtightness detection equipment according to claim 5, wherein the vacuum pumping device (3) further comprises a pneumatic butterfly valve (34), which is disposed on the molecular pump (31) and connected to the sealed space.

7. The airtightness detection equipment according to anyone of claims 1 to 6, wherein the sealing device (2) is provided with a first valve (5) connected to the sealed space, and the first valve (5) is used to break the vacuum in the sealed space.

8. The airtightness detection equipment according to claim 7, wherein the sealing device (2) is provided with a second valve (8) connected to the sealed space, and the second valve (8) is connected to the gas detection device (4).

9. The airtightness detection equipment according to anyone of claims 2 to 8, wherein the bracket (1) comprises at least two vertical beams (11) connected by a cross beam (12) which can vertically move along the vertical beams (11), and the sealing device (2) is disposed on the cross beam (12), and can reciprocate along the cross beam (12).

10. The airtightness detection equipment according to claim 9, wherein the airtightness detection equipment further comprises a plurality of rollers (13) provided at the bottom of the vertical beams (11).

11. The airtightness detection equipment according to any one of claims 1-10, wherein the airtightness detection equipment further comprises a controller (6) connected to the vacuum pumping device (3), and the controller is provided with an operation interface (9).
